# EUROPEAN PATENT SPECIFICATION

(11) **EP 3 016 862 B1**
(45) Date of publication and mention of the grant of the patent: **02.01.2019**
(21) Application number: 14794190.0
(22) Date of filing: 30.04.2014
(51) Int. Cl.: B64D 41/00, F02C 7/04, F01D 19/00, F02C 7/268, B64D 33/02

(54) **INLET DOOR CONTROL FOR STARTUP OF GAS TURBINE ENGINE**
EINLASSKLAPPENSTEUERUNG FÜR DAS ANLAUFEN EINES GASTURBINENMOTORS
COMMANDE DE PORTE D'ENTRÉE POUR LE DÉMARRAGE D'UN MOTEUR A TURBINE A GAZ

(30) Priority: 10.05.2013 US 201361821885 P
(43) Date of publication of application: 11.05.2016
(73) Proprietor: United Technologies Corporation, Farmington, CT 06032 (US)
(72) Inventor: WOLFF, Eric L., Encinitas, California 92024 (US); SHERRILL, Brent L., El Cajon, California 92021 (US); AJAMI, Andre M., Spring Valley, California 91977 (US); WINSTON, Kenneth W., San Diego, California 92129 (US); PASCU, Victor, San Diego, California 92128 (US); VESSA, Phillip, Thousand Oaks, California 91360 (US); DACUNHA, Nelson, East Hartford, Connecticut 06108 (US)
(74) Representative: Dehns
(86) International application number: PCT/US2014/036087
(87) International publication number: WO 2014/182519

(56) References cited:
- WO-A2-00/55485
- JP-A- 2008 080 934
- JP-A- 2010 203 326
- JP-A- 2010 254 296
- US-A- 3 417 767
- US-A1- 2007 068 169
- US-A1- 2012 312 023
- US-A1- 2013 074 519
- US-A1- 2013 104 559

## Description

### BACKGROUND

The present invention relates to inlet doors for gas turbine engines, and in particular to a system and method for controlling an inlet door during startup of an auxiliary power unit (APU) based upon aircraft flight conditions.

Gas turbine engines, and more specifically APUs, represent a class of engines used to generate kinetic and pneumatic energy. They are employed in a variety of applications, from ground-based power generators to aeronautical applications.

Starting an APU requires the engine to be motored to a certain speed such that the fuel-air mixture provided to the combustor is conducive to light-off (i.e., successful ignition of the engine). These conditions become much more difficult to achieve when at high altitude. For example, if an aircraft is flying at 40,000 feet (12,192 m), there will be very little air flowing through the engine, and the air that is flowing through the engine will be traveling at fairly high velocities. This makes it very difficult to start an APU, or any gas turbine engine at high altitudes.

The APU inlet door is located on the outer skin of the aircraft (e.g. near the tail cone of the aircraft) and is opened to provide airflow to the engine for startup and self-sustaining operation. Traditionally, startup of the APU is done with the APU door fully open. If the APU is started in-flight, having the inlet door fully open can cause air to move through the APU at high velocity. Thus, problems such as wind-milling, or too high of a delta pressure profile across the APU can occur when starting the APU in flight. It is desirable to provide a proper balance air velocity and volume to the APU during in-flight startup.

WO 00/55485 A2, which is regarded as being the closest prior art, discloses a gas turbine engine inlet door control system as set forth in the preamble of claim 1.

### SUMMARY

From a first aspect, the invention provides a gas turbine engine inlet door control system as set forth in claim 1.

The invention also provides a method of controlling an inlet door of a gas turbine engine, as set forth in claim 8.

Features of embodiments of the invention are set forth in the dependent claims.

### BRIEF DESCRIPTION OF THE DRAWINGS

FIG. 1 is a block diagram illustrating a system for controlling an inlet door according to an embodiment.
FIG. 2 is a flowchart illustrating a process flow for starting a gas turbine engine in flight according to an embodiment.
FIG. 3 is a flowchart illustrating a method for controlling an inlet door according to an embodiment.
FIG. 4 is a flowchart illustrating a process flow of controlling an inlet door of a gas turbine engine according to an alternate embodiment.

### DETAILED DESCRIPTION

The present invention relates to a system and method for controlling an inlet door for a gas turbine engine, and in particular to a system and method for controlling an inlet door for an auxiliary power unit (APU) during startup. The system includes an APU with an inlet door, an APU controller, an inlet door controller, and an inlet door actuator. The door controller and actuator operate to open the inlet door to an intermediate position between fully closed and fully opened prior to cranking the APU. The intermediate position is determined based upon a number of APU start factors including one or more flight conditions sent to the APU controller from the aircraft, APU conditions, and other factors such as time, air temperature, altitude, air speed, volume of airflow entering the inlet duct, air pressure, the content of oxygen entering the inlet door, etc. In an embodiment, these APU start factors may be measured external to the APU and include, for example, temperature, wind conditions, mach number and altitude. After the engine has started, the inlet door may be opened from the intermediate position to an optimal position and remain there during operation of the APU.

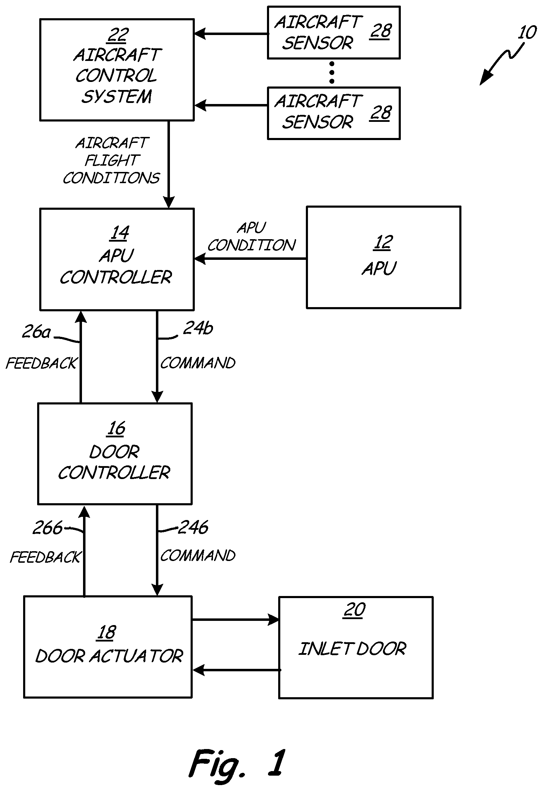

FIG. 1 is a block diagram illustrating a system 10 for controlling an inlet door for an APU. System 10 includes APU 12, APU controller 14, door controller 16, door actuator 18, inlet door 20, aircraft control system 22, command lines 24a and 24b, feedback lines 26a and 26b, and aircraft sensors 28. In an embodiment, the command lines 24a and 24b, and feedback lines 26a and 26b may be a single line, or may be signals transmitted wirelessly. In an embodiment, APU controller 14 and door controller 16 are microcontrollers or computer processors and may be implemented using, for example, a field programmable gate array (FPGA). Although illustrated as a system for controlling an inlet door of an APU, in an embodiment system 10 may be implemented to control an inlet door of any gas turbine engine. The door controller 16 may be integrated into the door actuator 18 as a single component. Aircraft sensors 28 sense flight conditions such as, for example, speed, wind conditions, altitude and temperature and provide these conditions as input to aircraft control system 22. In an embodiment, the flight conditions or other parameters are sent through the aircraft data bus from, for example, an aircraft engine controller. These flight conditions may be communicated to APU controller 14 from aircraft control system 22 using a communication link utilizing any aircraft communication protocol known in the art, or may be communicated directly from the sensors 28. Aircraft control system 22 is any aircraft control system known in the art, and is implemented external to APU 12.

Inlet door 20 is opened to, and held at an intermediate position prior to cranking of APU 12 to limit airflow to the engine. When starting an APU in flight, for example, air coming into the engine through inlet door 20 can vary quite drastically based upon conditions such as the speed or altitude of the aircraft. This makes starting an APU in flight an unpredictable process. By opening to, and holding inlet door 20 at an intermediate position during startup, the airflow to APU 12 is controlled to better facilitate light-off of the engine based upon flight conditions.

The intermediate position of inlet door 20 may be fixed for a given application, or may be determined in-flight based upon flight conditions provided by aircraft control system 22. In an embodiment, these conditions are measured by aircraft system controller 22 and are not measured by APU 12 itself. In an alternate embodiment, APU 12 may measure the conditions itself, or the conditions may be measured by a combination of APU 12 and aircraft system controller 22. APU controller 14 uses the flight conditions and/or other APU start factors to determine the proper intermediate position for inlet door 20 using, for example, a lookup table or real-time algorithm based on aircraft parameters. This intermediate position may be any position between closed and fully open, such as 15°. Flight parameters include the speed of the aircraft, altitude of the aircraft, wind conditions, and outside temperature. Additional APU start factors may include the exhaust temperature of APU 12, the rotational speed of APU 12, or a combination of APU start factors.

In an embodiment, inlet door 20 is operated by door controller 16 based upon commands received from APU controller 14. These commands include, among others, a "door open" command and "stop door" command, or a specific position command. Door controller 16 receives these commands and operates door actuator 18 to move, or stop moving inlet door 20, or to move inlet door 20 to a specific position. In an additional embodiment, door controller 16 monitors the current position of inlet door 20 and provides feedback of the position of inlet door 20 to APU controller 14. In this way, APU controller 14 can monitor the position of inlet door 20 while the door is in motion.

In an alternate embodiment, door controller 16 receives the various flight conditions and/or additional APU start factors directly and calculates the position of inlet door 20 and controls door actuator 18 directly.

Inlet door 20 is controlled to open to an intermediate position for startup of APU 12 in order to better facilitate light-off. To initiate startup, a start command is sent to APU controller 14 from, for example, the cockpit of the aircraft. In an embodiment, the APU may initiate a startup sequence automatically when a power loss is detected.

In an embodiment, prior to initiating startup of APU 12, APU controller 14 will send door controller 16 a "door open" command. Door controller 16 recognizes the "door open" command and begins moving inlet door 20 into an open position. Door controller 16 monitors the position of inlet door 20 and provides feedback to APU controller 14 on feedback line 26a to indicate the present position of inlet door 20. When APU controller 14 receives feedback that inlet door 20 has reached the predetermined intermediate position, APU controller 14 sends door controller 16 a "stop door" command. When door controller 16 receives the "stop door" command, it operates door actuator 18 to stop moving and hold inlet door 20 at its present position.

Once inlet door 20 is in the intermediate position, APU controller 14 operates to start the light-off procedure of APU 12, which includes cranking, ignition, and fuel delivery. During light-off, APU controller 14 operates to accelerate APU 12 to a light-off speed using, for example, a starter motor. Inlet door 20 remains at the intermediate position until light-off of APU 12 is detected. APU controller 14 monitors the speed of APU 12 to determine when light-off has occurred. When APU 12 reaches a predetermined speed as observed by APU controller 14, light-off has occurred and APU 12 is accelerated up to a self-sustaining speed.

Following light-off, APU controller 14 operates to open inlet door 20 from the intermediate position to an optimal open position in order to provide a proper operational airflow to APU 12 when the APU is at full operating speed. APU controller 14 sends a "door open" command to door controller 16. Door controller 16 operates door actuator 18 to open inlet door 20 from the intermediate state to a more open state. Door controller 16 monitors the position of inlet door 20 and provides the position as feedback to APU controller 14 while inlet door 20 is in motion. When APU controller 14 detects that inlet door 20 is in an optimal open position, APU controller 14 sends a "stop door" command to door controller 16. Door controller 16 operates door actuator 18 to stop and hold inlet door 20 in the optimal open position. Opening inlet door 20 to a fully open position following startup of APU 12 allows the proper airflow for APU operation at full operating speed. APU 12 can experience troubles such as flameout if inlet door 20 is left at an intermediate position during operation of APU 12.

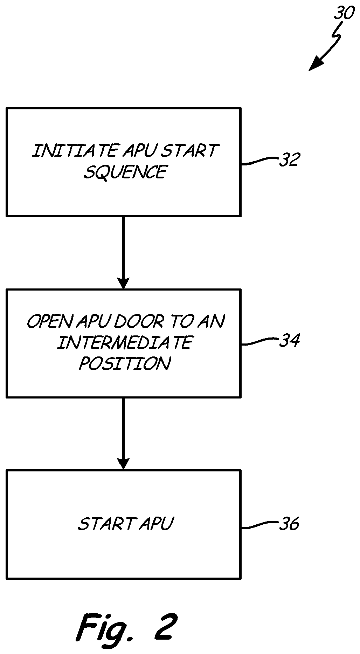

FIG. 2 is a flowchart illustrating a process flow 30 for starting an APU according to an embodiment. At block 32, a start sequence is initialized. In an embodiment, the start sequence may be initialized by a signal from the cockpit sent either manually by a pilot, or automatically based on one or more events. In an alternate embodiment, the APU initialization sequence may start automatically based on the detection of a loss of power, or some other system failure. At block 34, the APU inlet door 20 is opened to an intermediate position between fully closed and fully opened. At block 36, the APU 12 is started.

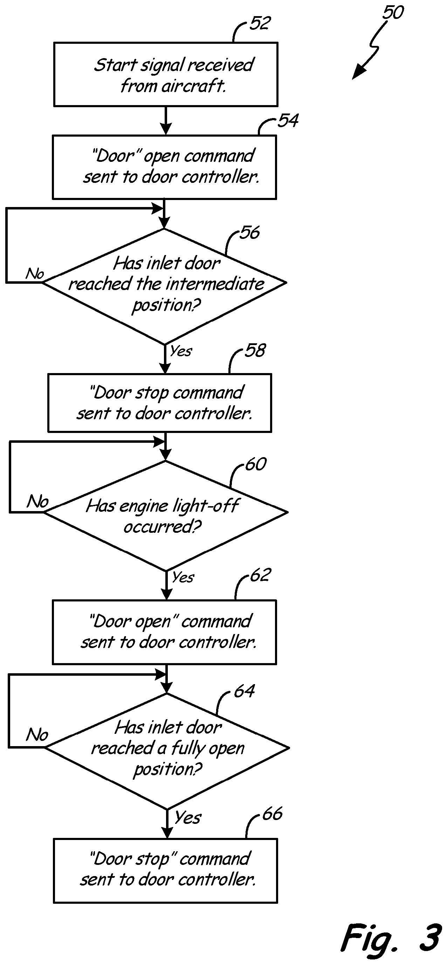

FIG. 3 is a flowchart illustrating a process flow 50 of controlling inlet door 20 of APU 12 as part of the APU initialization described above with regard to FIG.2, according to an embodiment. At step 52, APU controller 14 receives an external start command from, for example, the cockpit of the aircraft. At step 54, APU controller 14 sends a "door open" command to door controller 16. Method 50 remains at step 56 until door controller 16 has indicated to APU controller 14 that inlet door 20 has reached the intermediate position. At step 58, APU controller 16 sends a "door stop" command to door controller 16 in order to stop and hold inlet door 20 at the intermediate position. Method 50 then waits at step 60 until the speed of the APU reaches a value indicative of light-off, such as 35% of the maximum APU speed. At step 62, APU controller 14 sends a "door open" command to door controller 16. Door controller 16 operates door actuator 18 to set inlet door 20 in motion from the intermediate position to a more open position. Method 50 remains at step 64 until door controller 16 has indicated to APU controller 14 that inlet door 20 is at a fully open position. At step 66, APU controller 14 sends a "door stop" command to door controller 16. Door controller 16 operates door actuator 18 to stop and hold inlet door 20 at a fully open position for the remainder of APU operation.

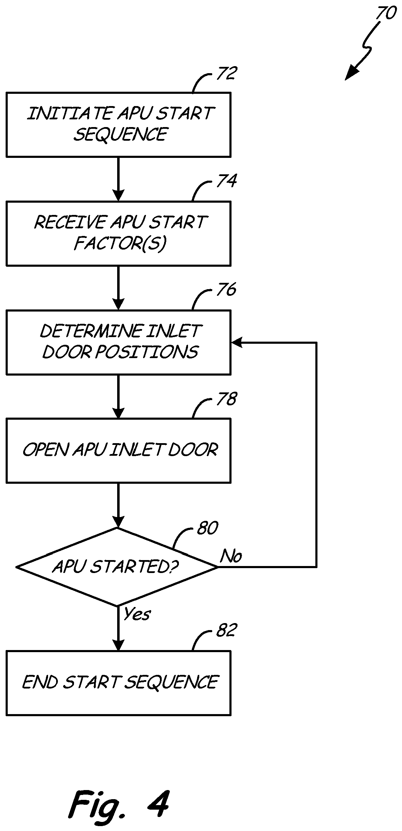

FIG. 4 is a flowchart illustrating a process flow 70 of controlling inlet door 20 of APU 12 as part of the APU initialization described above with regard to FIG. 2 according to an alternate embodiment. At block 72 an APU initialization sequence is started. At block 74, an APU controller receives one or more APU start factors. At block 76, the inlet door position is determined based on one or more APU start factors. In an embodiment, the inlet door position is determined by an algorithm that calculates an inlet door position based on, for example, air speed and altitude. In an additional embodiment, the inlet door position is determined by one or more APU start factors that are internal to the APU 12 such as engine rotation speed, engine temperature, etc. In an additional embodiment, the inlet door position is determined based on a combination of internal and external APU start factors. In yet another embodiment, the APU inlet door position is chosen from a table made up of two or more dimensions based on one more start factors.

At block 78, the APU inlet door 20 is opened to a position based on the determined position. In an additional embodiment, APU controller 14 transmits a digital or analog signal to door controller 16 that indicates the exact position to open the inlet door 20. In an embodiment, door controller 16 sends a signal to the door actuator 18 for a period of time corresponding to the amount of time required to open inlet door 20 to the determined position. In an additional embodiment, door controller 16 sends one or more discrete digital or analog signals that cause inlet door actuator 18 to open inlet door 20 to the determined position.

At block 80, it is determined if APU 12 has started. APU controller 14 determines if APU 12 has started based on the engine rotation speed. If APU 12 has not started, then processing continues at block 76 where the position of APU inlet door 20 is determined once more using one or more of the methods described above. In an embodiment, the position of APU inlet door 20 is determined and then opened or closed to the newly determined position substantially constantly until APU 12 has started. In an embodiment, a different algorithm or table may be used to calculate the APU inlet door position based on a range of one or more APU start factors. For example, in an embodiment, a first algorithm may be used to calculate the APU door inlet position while the aircraft is under 8,000 feet (2438 m) of altitude, a second algorithm may be used between 8,000 feet (2438 m) and 10,000 feet (3048 m) of altitude, and a third algorithm may be used above 10,000 feet (3048 m). In an embodiment, any number of different algorithms may be used, and one or more of the algorithms may be selecting a value from one or more multi-dimensional tables.

At block 82, if APU 12 has started, the start sequence ends. In an embodiment, once the start sequence ends APU inlet door 20 is opened completely. In an embodiment, the position of APU inlet door 20 may continue to be adjusted after APU 12 has started, and until APU 12 is fully operational. In yet another embodiment, one or more algorithms may be used to continuously adjust the position of inlet door 20 even after APU 12 is fully operational in order to maximize efficiency of APU 12.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A gas turbine engine inlet door control system (10) comprising:
an actuator (18) for opening and closing an inlet door (20) of a gas turbine engine;
an engine controller (14) for determining an intermediate door position based upon one or more engine start factors; and
a door controller (16) for operating the actuator (18) to open the inlet door (20) to the intermediate door position based on the one or more engine start factors, **characterised in that** the door controller (16) is configured to operate the actuator (18) to open the inlet door (20) to, and hold the inlet door (20) at a fully open position following light-off of the gas turbine engine, and **in that** light-off of the gas turbine engine is detected by the engine controller (16) based upon detecting a predetermined speed of the gas turbine engine.

2. The system of claim 1, wherein the engine controller (14) is configured to send a command to the door controller (16), the command configured to instruct the door controller (16) to open the door (20).

3. The system of claim 2, wherein the door controller (16) is configured to provide feedback to the engine controller (14) indicating a current position of the inlet door (20).

4. The system of claim 3, wherein the command is a start command configured to instruct the door controller (16) to begin opening the door (20), and the engine controller (14) is further configured to send a stop command to the door controller (16) upon the current position of the inlet door being equal to the intermediate door position.

5. The system of claim 2, 3 or 4, wherein the open command includes a discrete instruction that includes the intermediate door position, and the door controller (16) is configured to open the door (20) to the intermediate position included in the discrete instruction.

6. The system of any preceding claim, wherein the engine start factors include one or more aircraft flight conditions, and further comprising aircraft sensors (28) for sensing the one or more aircraft flight conditions and providing the aircraft flight conditions to an aircraft control system (22), wherein the aircraft control system (22) provides the aircraft flight conditions to the engine controller (14).

7. The system of any preceding claim, wherein the door controller (16) is configured to continuously adjust the inlet door position based on a change of one or more of the engine start factors.

8. A method of controlling an inlet door (20) of a gas turbine engine, the method comprising:
receiving one or more engine start factors following initiation of a start sequence;
determining, by a computer processor, an intermediate position for the inlet door (20) based upon the one or more engine start factors;
opening the inlet door (20) of the gas turbine engine to the intermediate position; and
starting the gas turbine engine;
detecting light-off of the gas turbine engine, by the engine controller (16), based upon detecting a predetermined speed of the gas turbine engine;
opening the inlet door (20) to a fully open position following light-off of the gas turbine engine; and
holding the inlet door (20) at the fully open position following light-off of the gas turbine engine.

## Patentansprüche

1. Steuerungssystem (10) für eine Einlassklappe eines Gasturbinenmotors, Folgendes umfassend:
einen Aktuator (18) zum Öffnen und Schließen einer Einlassklappe (20) eines Gasturbinenmotors;
eine Motorsteuerung (14) zum Bestimmen einer Klappenzwischenposition basierend auf einem oder mehreren Motorstartfaktoren; und
eine Klappensteuerung (16) zum Betreiben des Aktuators (18), um die Einlassklappe (20) bis zu der Klappenzwischenposition basierend auf dem einen oder mehreren Motorstartfaktoren zu öffnen, **dadurch gekennzeichnet, dass** die Klappensteuerung (16) konfiguriert ist, um den Aktuator (18) zu betreiben, um die Einlassklappe (20) im Anschluss an die Zündung des Gasturbinenmotors bis zu einer vollständig geöffneten Position zu öffnen und die Einlassklappe (20) dort zu halten, und dadurch, dass die Zündung des Gasturbinenmotors durch die Motorsteuerung (16) basierend auf dem Erfassen einer vorbestimmten Geschwindigkeit des Gasturbinenmotors erfasst wird.

2. System nach Anspruch 1, wobei die Motorsteuerung (14) konfiguriert ist, um einen Befehl an die Klappensteuerung (16) zu senden, wobei der Befehl konfiguriert ist, um die Klappensteuerung (16) anzuweisen, die Klappe (20) zu öffnen.

3. System nach Anspruch 2, wobei die Klappensteuerung (16) konfiguriert ist, um eine Rückmeldung an die Motorsteuerung (14) bereitzustellen, die eine aktuelle Position der Einlassklappe (20) angibt.

4. System nach Anspruch 3, wobei der Befehl ein Startbefehl ist, der konfiguriert ist, um die Klappensteuerung (16) anzuweisen, mit dem Öffnen der Klappe (20) anzufangen, und die Motorsteuerung (14) ferner konfiguriert ist, um einen Stoppbefehl an die Klappensteuerung (16) zu senden, wenn die aktuelle Position der Einlassklappe gleich der Klappenzwischenposition ist.

5. System nach Anspruch 2, 3 oder 4, wobei der Öffnungsbefehl eine separate Anweisung beinhaltet, die die Klappenzwischenposition beinhaltet, und die Klappensteuerung (16) konfiguriert ist, um die Klappe (20) bis zu der Klappenzwischenposition zu öffnen, die in der separaten Anweisung beinhaltet ist.

6. System nach einem der vorhergehenden Ansprüche, wobei die Motorstartfaktoren eine oder mehrere Flugreisebedingungen beinhalten, und das ferner Flugzeugsensoren (28) zum Messen der einen oder mehreren Flugreisebedingungen umfasst und die Flugreisebedingungen für ein Flugzeugsteuerungssystem (22) bereitstellt, wobei das Flugzeugsteuerungssystem (22) die Flugreisebedingungen für die Motorsteuerung (14) bereitstellt.

7. System nach einem der vorhergehenden Ansprüche, wobei die Klappensteuerung (16) konfiguriert ist, um die Position der Einlassklappe basierend auf einer Veränderung eines oder mehrerer der Motorstartfaktoren ständig anzupassen.

8. Verfahren zum Steuern einer Einlassklappe (20) eines Gasturbinenmotors, wobei das Verfahren Folgendes umfasst:
Empfangen eines oder mehrerer Motorstartfaktoren im Anschluss an die Initiierung einer Startsequenz;
Bestimmen, durch einen Computerprozessor, einer Zwischenposition für die Einlassklappe (20) basierend auf dem einen oder den mehreren Motorstartfaktoren;
Öffnen der Einlassklappe (20) des Gasturbinenmotors bis zu der Zwischenposition; und
Starten des Gasturbinenmotors;
Erfassen einer Zündung des Gasturbinenmotors, durch die Motorsteuerung (16), basierend auf dem Erfassen einer vorbestimmten Geschwindigkeit des Gasturbinenmotors;
Öffnen der Einlassklappe (20) bis zu einer vollständig geöffneten Position im Anschluss an die Zündung des Gasturbinenmotors; und
Halten der Einlassklappe (20) in der vollständig geöffneten Position im Anschluss an die Zündung des Gasturbinenmotors.

## Revendications

1. Système de commande de porte d'entrée de moteur à turbine à gaz (10) comprenant :
un actionneur (18) pour ouvrir et fermer une porte d'entrée (20) d'un moteur à turbine à gaz ;
un dispositif de commande de moteur (14) pour déterminer une position de porte intermédiaire sur la base d'un ou de plusieurs facteurs de démarrage de moteur ; et
un dispositif de commande de porte (16) pour faire fonctionner l'actionneur (18) afin d'ouvrir la porte d'entrée (20) jusqu'à la position de porte intermédiaire sur la base des un ou plusieurs facteurs de démarrage de moteur, **caractérisé en ce que** le dispositif de commande de porte (16) est configuré pour faire fonctionner l'actionneur (18) afin d'ouvrir la porte d'entrée (20) jusqu'à, et de maintenir la porte d'entrée (20) dans une position totalement ouverte à la suite de l'allumage du moteur à turbine à gaz, et **en ce que** l'allumage du moteur à turbine à gaz est détecté par le dispositif de commande de moteur (16) sur la base de la détection d'une vitesse prédéterminée du moteur à turbine à gaz.

2. Système selon la revendication 1, dans lequel le dispositif de commande de moteur (14) est configuré pour envoyer une instruction au dispositif de commande de porte (16), l'instruction étant configurée pour donner au dispositif de commande de porte (16) l'ordre d'ouvrir la porte (20).

3. Système selon la revendication 2, dans lequel le dispositif de commande de porte (16) est configuré pour fournir un retour au dispositif de commande de moteur (14) indiquant une position actuelle de la porte d'entrée (20).

4. Système selon la revendication 3, dans lequel l'instruction est une instruction de démarrage configurée pour donner au dispositif de commande de porte (16) l'ordre de commencer à ouvrir la porte (20), et le dispositif de commande de moteur (14) est en outre configuré pour envoyer une instruction d'arrêt au dispositif de commande de porte (16) lorsque la position actuelle de la porte d'entrée est égale à la position de porte intermédiaire.

5. Système selon la revendication 2, 3 ou 4, dans lequel l'instruction d'ouverture inclut un ordre distinct qui inclut la position de porte intermédiaire, et le dispositif de commande de porte (16) est configuré pour ouvrir la porte (20) jusqu'à la position intermédiaire incluse dans l'ordre distinct.

6. Système selon une quelconque revendication précédente, dans lequel les facteurs de démarrage de moteur incluent un ou plusieurs états de vol d'aéronef, et comprenant en outre des capteurs d'aéronef (28) pour détecter les un ou plusieurs états de vol d'aéronef et fournir les états de vol d'aéronef à un système de commande d'aéronef (22), dans lequel le système de commande d'aéronef (22) fournit les états de vol d'aéronef au dispositif de commande de moteur (14).

7. Système selon une quelconque revendication précédente, dans lequel le dispositif de commande de porte (16) est configuré pour ajuster en continu la position de porte d'entrée sur la base d'un changement d'un ou de plusieurs des facteurs de démarrage de moteur.

8. Procédé de commande d'une porte d'entrée (20) d'un moteur à turbine à gaz, le procédé comprenant :
la réception d'un ou de plusieurs facteurs de démarrage de moteur suite au lancement d'une séquence de démarrage ;
la détermination, par un processeur informatique, d'une position intermédiaire pour la porte d'entrée (20) sur la base des un ou plusieurs facteurs de démarrage de moteur ;
l'ouverture de la porte d'entrée (20) du moteur à turbine à gaz jusqu'à la position intermédiaire ; et
le démarrage du moteur à turbine à gaz ;
la détection de l'allumage du moteur à turbine à gaz, par le dispositif de commande de moteur (16), sur la base de la détection d'une vitesse prédéterminée du moteur à turbine à gaz ;
l'ouverture de la porte d'entrée (20) jusqu'à une position totalement ouverte à la suite de l'allumage du moteur à turbine à gaz ; et
le maintien de la porte d'entrée (20) dans la position totalement ouverte à la suite de l'allumage du moteur à turbine à gaz.
